Europäisches Patentamt

European Patent Office

Office européen des brevets

(11) Veröffentlichungsnummer: **0 308 722**
**A1**

## (12) EUROPÄISCHE PATENTANMELDUNG

(21) Anmeldenummer: 88114569.2

(22) Anmeldetag: 07.09.88

(51) Int. Cl.⁴: **A01L 5/00**

(30) Priorität: 23.09.87 DE 3731905

(43) Veröffentlichungstag der Anmeldung:
**29.03.89 Patentblatt 89/13**

(84) Benannte Vertragsstaaten:
**AT BE CH DE ES FR GB IT LI LU NL SE**

(71) Anmelder: **MUSTANG S.A.**
**2, rue de l'Industrie**
**CH-1630 Bulle(CH)**

(72) Erfinder: **Mustad, Ole K.**
**Im Pfruendli**
**CH-3785 Gsteig(CH)**
Erfinder: **Mustad, Clarin**
**Cerisier 7**
**CH-2300 La Chaux-de-Fonds(CH)**

(74) Vertreter: **Schaefer, Konrad**
**Gehölzweg 20**
**D-2000 Hamburg 70(DE)**

(54) **Pferdehufschuh aus Kunststoff.**

(57) Ein Pferdehufschuh aus Kunststoff zur Klebebefestigung weist einen aus Kunststoff und Metall bestehenden Sohlenteil auf, bei dem das Metallteil
kaltverformbar ausgebildet ist und mit im wesentlichen freiliegenden Längsflächen den zur Verformung erforderlichen Werkzeugangriff zuläßt.

Fig 1

EP 0 308 722 A1

### Pferdehufschuh aus Kunststoff

Die Erfindung betrifft einen Pferdehufschuh der im Oberbegriff des Anspruches 1 genannten Art.

Pferdehufschuhe aus Kunststoff mit Klebebefestigung auf der Hufaußenfläche weisen gegenüber herkömmlichen Hufeisen den wesentlichen Vorteil auf, daß sie nicht durch Nageln die Gesundheit des Pferdes gefährden. Aufgrund ihrer Elastizität erlauben sie ferner die physiologisch notwendigen Eigenbewegungen des Hufes, sind also insgesamt erheblich gesünder.

Ein wesentliches Problem bei Pferdehufschuhen aus Kunststoff ist jedoch die Formsteifigkeit bei den hohen Laufbelastungen. Zu starke Verformungen führen unweigerlich zum Abreißen auch gut sitzender Klebebefestigungen. Es muß daher dafür Sorge getragen werden, daß der Sohlenteil des Pferdehufschuhes ausreichende Formsteifigkeit aufweist, um Stoßbelastungen in sich aufzufangen und gleichmäßig auf die Klebebefestigungen zu verteilen.

Aus der DE-PS 28 15 374 ist es bekannt, ein aus Blech hergestelltes Metallteil mit Kunststoff zu vergießen, wobei sowohl der Kunststoff als auch das Metallteil gemeinsam zur Formsteifigkeit des Sohlenteils beitragen. Nachteilig hierbei ist jedoch die Tatsache, daß sowohl der Kunststoff als auch das Metallteil des Sohlenteiles im wesentlichen federnd nachgebend ausgebildet sind und somit nach der Herstellung nicht mehr zur Anpassung an den Huf bleibend verformt werden können. Diese bekannte Konstruktion muß also individuell dem Huf angepaßt hergestellt werden, was äußerst aufwendig ist.

Ein Pferdehufschuh der eingangs genannten Art ist aus der DE-OS 29 02 189 bekannt. Bei dieser Konstruktion übernimmt das entsprechend stärker ausgebildete Metallteil allein die Formsteifigkeit des Sohlenteiles, wobei der umgebende Kunststoff relativ weich ausgebildet ist. Der Kunststoff formt sich daher stets der Bogenform des Metallteiles an. Zur individuellen Anpassung an den Huf eines Pferdes muß nur das Metallteil in die korrekte Form gebogen werden. Der Pferdehufschuh besitzt dann automatisch die korrekte Formgebung, die für guten Sitz, insbesondere der Klebebefestigung, maßgebend ist.

Bei dieser bekannten Konstruktion ist das Metallteil in eine offene Nut des aus Kunststoff bestehenden Sohlenteiles eingebettet. Es wird in die korrekte Form gebracht und dann in die Nut eingesetzt. Hieraus ergeben sich aber wesentliche Nachteile. Zum einen ist es außerordentlich schwierig, das Metallteil in die fest umschließende, daher T-förmige Nut einzusetzen, da der Kunststoff relativ steif sein muß, um den Formschluß mit dem Metallteil unter Stoßbelastungen zu sichern. Zum anderen kann das Eisen bei Stoßbelastungen sich dennoch aus der Nut lösen.

Die Aufgabe der vorliegenden Erfindung besteht daher darin, einen Pferdehufschuh der eingangs genannten Art zu schaffen, der einfach handhabbar ist und hohen Stoßbelastungen standhält.

Diese Aufgabe wird erfindungsgemäß mit den Merkmalen des Kennzeichnungsteils des Anspruches 1 gelöst.

Bei der erfindungsgemäßen Konstruktion ist das Metallteil durch Umgießen formschlüssig mit dem Kunststoff des Sohlenteiles verbunden. Dadurch wird eine dauerhafte Verbindung geschaffen, die auch bei Stoßbelastungen nicht zur Trennung von Kunststoff und Metall führen kann. Insbesondere sorgen die dabei von Kunststoff durchgriffenen Durchbrechungen im Metallteil für einen festen Verbund. Dabei ist aber dafür Sorge getragen, daß die Längsflächen des Metallteiles (oben, unten, links, rechts) im wesentlichen freiliegen, und zwar derart, daß an ihnen mit zur Verformung benötigtem Werkzeug mit ausreichend hoher Kraft angegriffen werden kann. Dazu können die Flächen des Metallteiles je nach Ausführungsform der Erfindung zumindest teilweise völlig freiliegen oder mit einer so dünnen Kunststoffschicht überzogen sein, daß Werkzeugangriff mit ausreichender Kraft gewährleistet ist. Das Metallteil ist erfindungsgemäß kaltverformbar ausgebildet und läßt sich somit ohne Temperaturbelastung des Kunststoffes verformen. Die erfindungsgemäße Konstruktion sieht also einen einstückigen Hufschuh vor, der ohne individuelle Anpassung in Standardgrößen vorgefertigt sein kann und vor Ort dem Huf durch Kaltverformung angepaßt wird. Diese Arbeiten kann der Hufschmied ohne wesentliche Umlernarbeit in weitgehend bekannter Weise vornehmen. Dabei bleibt die Kunststoff-Metallverbindung in hoher Festigkeit erhalten, und es ergibt sich eine individuell dem Huf angepaßte Konstruktion, bei der der Sohlenteil in gewünschter Weise durch das Metallteil formstabil ausgesteift ist.

Weiterhin vorteilhaft sind die Merkmale des Anspruches 2 vorgesehen. Bei dieser Ausbildung kann Kunststoff nur oberhalb und unterhalb des Metallteiles vorgesehen sein, wobei die von Kunststoff durchflossenen Durchbrechungen die Verbindung sichern. Dadurch ergibt sich eine sehr gute unzerstörbare Verbindung von Kunststoff und Metall, wobei die Seitenflächen des Metallteiles völlig freigelassen sein können, um dort zur Anpassung des Metallteiles an die individuelle Hufform den Werkzeugangriff zuzulassen.

Weiterhin vorteilhaft sind die Merkmale des Anspruches 3 vorgesehen. Es reicht gegebenenfalls aus, wenn der Kunststoff jenseits der Durchbrechungen nur zu im wesentlichen pilzförmig ausgebildeten Inseln verbreitet ist, um den notwendigen Halt zu sichern. Wird jedoch auf beiden Seiten der Durchbrechungen der Kunststoff durchverbunden, so ergibt sich ein noch besserer Halt.

Dabei sind vorteilhaft die Merkmale des Anspruches 4 vorgesehen. Diese nach unten offene Rinne des Metallteiles kann zwischen den Durchbrechungen sich erstreckenden Kunststoff aufnehmen, der durch die nach unten ragenden Ränder der Rinne gegen Verschleiß geschützt ist.

Weiterhin vorteilhaft sind die Merkmale des Anspruches 5 vorgesehen. Eine die Längsflächen des Metallteiles überziehende dünne Kunststoffschicht ausreichend geringer Dicke stört den zur Kaltverformung des Metallteiles erforderlichen Werkzeugangriff nur unwesent lich. Sie bietet aber Vorteile hinsichtlich der Verletzungsgefahr des Pferdes an Kanten des Metallteiles sowie hinsichtlich der Rutschsicherheit bei kunststoffüberzogener Unterseite des Metallteiles und ergibt bei kunststoffüberzogener Oberseite des Metallteiles einen elastisch stoßdämpfenden Aufstand für den Pferdehuf.

Schließlich sind vorteilhaft die Merkmale des Anspruches 6 vorgesehen. Solche quer erstreckte Rillen können bei vollständigem Kunststoffüberzug der entsprechenden Metallteilfläche für eine Oberflächenverzahnung von Kunststoff und Metall in Längsrichtung sorgen, was insbesondere an den Seitenteilen des Kunststoffhufschuhes bei Laufbelastungen ein Verschieben von Kunststoff zu Metall verhindert. In anderer Ausbildung können die Metallflächen zwischen den Längsrillen völlig freiliegen zum Zwecke verbesserten Werkzeugangriffes, während die Rillen mit Kunststoff gefüllt sind und somit in den Rillen eine Kunststoffverbindung zwischen gegenüberliegenden Flächen des Metallteiles geschaffen werden kann. Auf diese Weise ist eine Konstruktion möglich, in der das Metallteil in den Querschnitt umgebenden Kunststoff eingeschlossen ist, dennoch aber mit Oberflächenteilen zum Werkzeugangriff freiliegt.

In den Zeichnungen ist die Erfindung beispielsweise und schematisch dargestellt. Es zeigen:

Fig. 1 eine Seitenansicht eines erfindungsgemäßen Hufschuhes an einem Huf montiert,

Fig. 1a eine Ansicht des Hufschuhes gemäß Fig. 1 von unten,

Fig. 2 und 3 Schnitte gemäß Linien 2 - 2 und 3 - 3 in Fig. 1,

Fig. 4a bis c Draufsicht, Seitenansicht und Bodenansicht des Metallteiles des Hufschuhes gemäß Fig. 1,

Fig. 5a und b Schnitte gemäß Linien 2 - 2 bzw. 3 - 3 in den Fig. 4a bis 4c,

Fig. 6 einen Schnitt entsprechend Fig. 2 durch eine andere Ausführungsform des erfindungsgemäßen Hufschuhes,

Fig. 7 eine Bodenansicht des Metallteiles des Hufschuhes gemäß Fig. 6,

Fig. 8 einen Schnitt gemäß Fig. 6 durch eine weitere Ausführungsform,

Fig. 9 eine Bodenansicht des Metallteiles der Ausführungsform der Fig. 8,

Fig.10 einen Schnitt gemäß Fig. 6 durch eine weitere Ausführungsform und

Fig.11 eine perspektivische Darstellung des Metallteiles der Ausführungsform der Fig. 10.

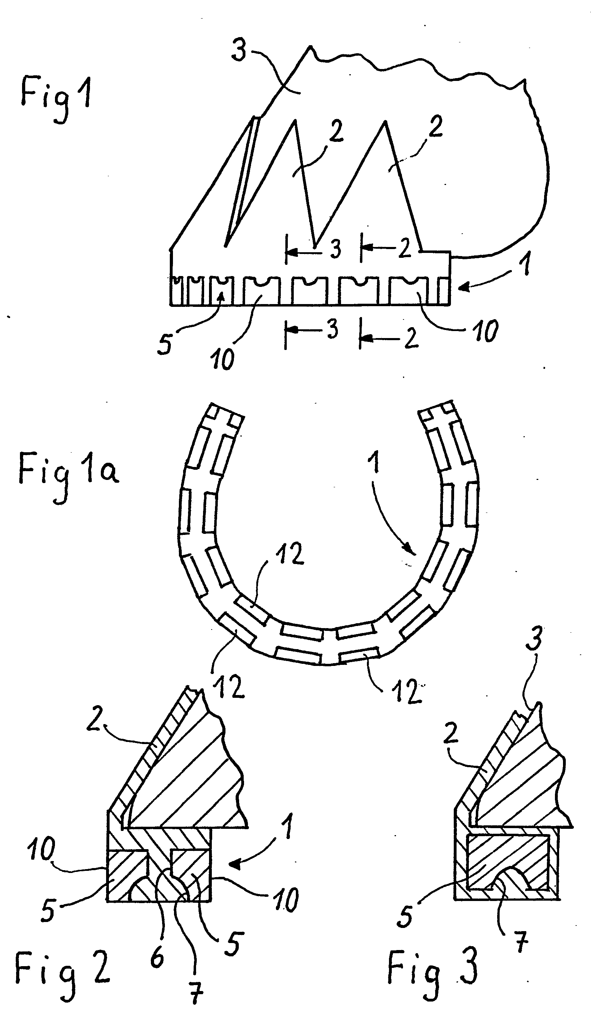

Die Fig. 1 bis 5b stellen eine bevorzugte Ausführungsform des erfindungsgemäßen Pferdehufschuhes dar. Dabei zeigt Fig. 1 zunächst die Seitenansicht des Pferdehufschuhes in montierter Lage an einem Pferdehuf.

Der dargestellte Pferdehufschuh weist einen Sohlenteil 1 auf, der Kunststoff- und Metallkomponenten enthält. Einstückig mit der Kunststoffkomponente des Sohlentei les 1 sind, vom Außenrand des Sohlenteiles 1 aufragend, Wandteile in Form von Laschen 2 vorgesehen, die mittels Sekundenkleber auf der Hufaußenfläche 3 befestigt sind.

Fig. 1a zeigt die Ansicht von unten auf den Pferdehufschuh, jedoch ohne Huf. Es ist die typische hufeisenförmige Ausbildung des Sohlenteiles 1 zu erkennen.

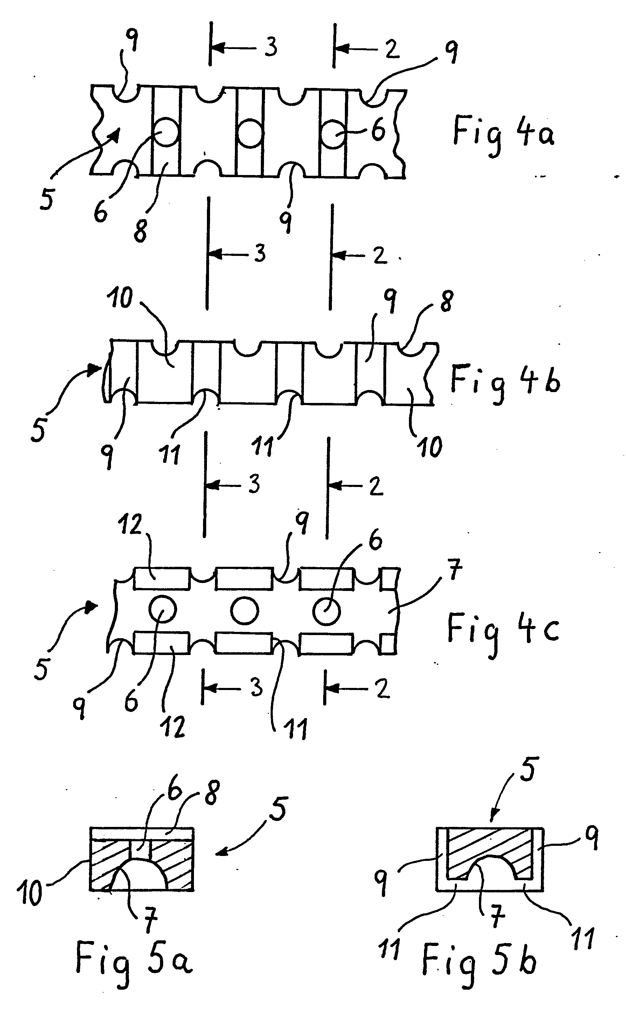

Wie die beiden Schnitte der Fig. 2 und 2 zeigen, ist im Sohlenteil 1 ein Metallteil 5 eingebettet, das in den Fig. 4a bis 4c in Draufsicht, Seitenansicht und Bodenansicht gesondert dargestellt ist. Die Schnittlinien der Fig. 2 und 3 sind in Fig. 1 mit 2 - 2 und 3 - 3 eingezeichnet. Dieselben Schnittlinien finden sich auch in den Fig. 4a bis 4c. Schnitte durch das Metallteil 5 sind in den Fig. 5a und 5b dargestellt, und zwar stellt Fig. 5a einen Schnitt an der Linie 2-2 und Fig. 5b einen Schnitt an der Linie 3 - 3 dar.

Wie die Fig. 2, 4a, 4c und 5a zeigen, weist das Metallteil eine Reihe von lotrecht verlaufenden Durchbrechungen 6 auf, die in einfacher Weise als Bohrungen ausgebildet sein können. Wie Fig. 2 zeigt, ist in diesen Bohrungen das Metallteil 5 von Kunststoff durchflossen. Auf der Unterseite des Metallteiles 5 ist, wie in den Fig. 5a und 5b zu ersehen ist, eine Rinne 7 ausgebildet, in die die Durchbrechungen 6 von oben münden. Wie die Fig. 2 und 3 zeigen, ist bei dem fertigen Sohlenteil 1 die Rinne 7 mit Kunststoff gefüllt. Der durch die Durchbrechungen 6 hindurchragende Kunststoff verbreitet sich also unter den Durchbrechungen in die Rinne 7 und schafft somit einen sicheren Halt gegen ein Auseinanderreißen von Kunststoff und Metall in lotrechter Richtung.

Auf der Oberseite des Metallteiles 5, die in Fig. 4a dargestellt ist, befinden sich quer verlaufende obere Rillen 8, die im dargestellten Ausführungsbeispiel in vorteilhafter Weise über den Durchbrechungen 6 angeordnet sind. Wie der Vergleich der Fig. 2 und 3 zeigt, ist daher die Kunststoffbedeckung der Oberfläche des Metallteiles 5 in den Rillen 8 (dort liegt der Schnitt der Fig. 2) dicker als an den übrigen Stellen (Fig.3), so daß dort am Übergang aus den Durchbrechungen 6 in die Bedeckung des Metallteiles der Kunststoff nicht zu sehr im Querschnitt geschwächt ist. In den Rillen 8 verläuft außerdem der Kunststoff mit größerem Querschnitt zwischen den Laschen 2 und den Durchbrechungen 6, was weiter die Reißfestigkeit des Kunststoffes bei der Übertragung der Kräfte vom Metallteil zu den Laschen verbessert.

Auch in den sich gegenüberliegenden Seitenwänden des Metallteiles 5, von denen eine in Fig. 4b dargestellt ist, sind lotrecht verlaufende seitliche Rillen 9 vorgesehen. Diese sind, wie Fig. 3 zeigt, bei der der Schnitt durch die seitlichen Rillen 9 verläuft, mit Kunststoff gefüllt. In den zwischen den seitlichen Rillen 9 liegenden Seitenflächenteilen 10 liegt das Metallteil 5 jedoch, wie die Fig. 1 und 2 zeigen, frei ohne Kunststoffbedeckung.

An der Unterseite des Metallteiles 5, die in Fig. 4c dargestellt ist, sind untere Rillen 11 vorgesehen, die in der Querebene der seitlichen Rille 9 liegen und in diese übergehen. Der Kunststoff in den seitlichen Rillen 9 steht also durch die unteren Rillen 11 mit dem Kunststoff in der im Boden des Metallteiles angeordneten Rinne 7 in durchgängiger Verbindung, wie dies die Fig. 3 zeigt, die an entsprechender Stelle geschnitten ist. Schmale rechteckige seitliche Boden flächen 12 des Metallteiles liegen, wie dies die Fig. 1a und 2 zeigen, nach unten frei.

Es ergibt sich eine äußerst sichere und feste Verbindung von Kunststoff und Metall. Dabei ist das Metallteil 5 innen, nämlich durch die Durchbrechungen 6, von Kunststoff durchgriffen. Außerdem ist es seitlich über die seitlichen Rillen 9 und die unteren Rillen 11 zur Rinne 7 hin mit Kunststoff gitterartig umfaßt. Dadurch ist eine sehr sichere abreißfeste Verbindung von Kunststoff und Metall geschaffen, die bei geeigneter Wahl des Kunststoffes durch die Laufbelastungen nicht zerstört werden kann. Der Kunststoff ist außerdem um das Metallteil 5 herum derart angeordnet, daß er gut gegen Abrieb geschützt ist. An der Unterseite des Metallteiles 5 liegt der Kunststoff in der Rinne 7 bzw. in den unteren Rillen 11 geschützt. Der verschleißgefährdete Eingriff des Sohlenteiles 1 mit dem Boden, auf dem das Pferd läuft, geschieht im wesentlichen über die freiliegenden Bodenflächen 11, die die wesentlichen Aufstands- und Abriebkräfte aufnehmen. Auch gegen seitliche Berührungen liegt der Kunststoff in den seitlichen Rillen 9 geschützt zwischen den freiliegenden Seitenflächenteilen 10.

Dabei ist das Metallteil 5 derart widerstandsfähig, insbesondere aufgrund seines großen Querschnittes, ausgebildet, daß es die beim Laufen und Springen des Pferdes auftretenden Belastungen, insbesondere Stoßbelastungen, allein aufnehmen kann. Daher können die Kunststoffanteile des Sohlenteiles 1 relativ dünn und mit schwachen Querschnitten ausgebildet sein, wie dies die Figuren zeigen. Die Kunststoffanteile sorgen lediglich für die reißfeste Anbindung der Laschen 2 zur Verklebung auf der Hufaußenfläche 3. Hinsichtlich der Formsteifigkeit des Sohlenteiles 1 bei Laufbelastungen müssen die Kunststoffanteile des Sohlenteiles nicht beitragen.

Da erfindungsgemäß das Metallteil 5 den Sohlenteil ausreichend versteift, kann der üblicherweise bei Kunststoffhufschuhen vorgesehene Riegel zwischen den hinteren Enden des Sohlenteiles entfallen, wodurch die Konstruktion weiter vereinfacht wird.

Bei dieser erfindungsgemäßen Ausbildung wird die Form des Sohlenteils 1, die individuell dem Huf anzupassen ist, wie dies Fig. 1a in einem Beispiel zeigt, durch die Formgebung des Metallteiles 5 bestimmt, dem sich die umgebenden Kunststoffanteile des Sohlenteiles 1 nachgiebig anformen.

In erfindungswesentlicher Weise ist das Metallteil 5 kaltverformbar ausgebildet. Das Metallteil kann aus Stahl, Aluminium oder geeigneten Metallegierungen bestehen. Dadurch bietet sich die Möglichkeit, das fertig mit Kunststoff umgebene Metallteil 5 durch Kaltverformung in die gewünschte individuell zum Huf passende Form zu bringen. Die zur Kaltverformung erforderlichen sehr hohen Kräfte, die beim Schmied üblicherweise mittels Hammer und Amboß aufgebracht werden, können bei der in den Fig. 1 bis 5b dargestellten Ausführungsform direkt am Metallteil 5 angreifen, nämlich an den seitlichen freiliegenden Seitenflächenteilen 10. Ohne Störung durch dazwischenliegenden elastischen Kunststoff kann hier unmittelbar mit Metall auf Metall angegriffen und in weitgehend üblicher Weise gehämmert und gebogen werden. Wenn, was häufig vorkommt, beim korrekten Einstellen der U-Form des Sohlenteiles 1 durch Kaltverformung Verwerfungen in lotrechter Richtung auftreten, so können auch diese durch Kaltverformung korrigiert werden. Dabei kann von unten an den freiliegenden Bodenflächen 12 unmittelbar angegriffen werden und von oben auf der Oberfläche des Sohlenteiles 1, die wie Fig. 3 zeigt, nur dünn von Kunststoff bedeckt ist, mit einer Kunststoffdikke, die beim Werkzeugangriff nur unwesentlich stört.

Der erfindungsgemäße Pferdehufschuh kann somit in wenigen Standardgrößen komplett vorgefertigt werden, wobei in einer Gießmaschine das Metallteil 5 mit Kunststoff umgossen wird unter Anformung der Laschen 2. Der so geschaffene Pferdehufschuh wird vor Ort vom Hufschmied durch Kaltverformung der individuellen Form des Hufes angepaßt, so daß insbesondere in seinem Umfang der Pferdehufschuh genau dem Huf anliegt und somit die Laschen 2 auf ganzer Fläche verklebt werden können. Dies ist besonders wichtig, um Abreißen bei Laufbelastungen zu vermeiden.

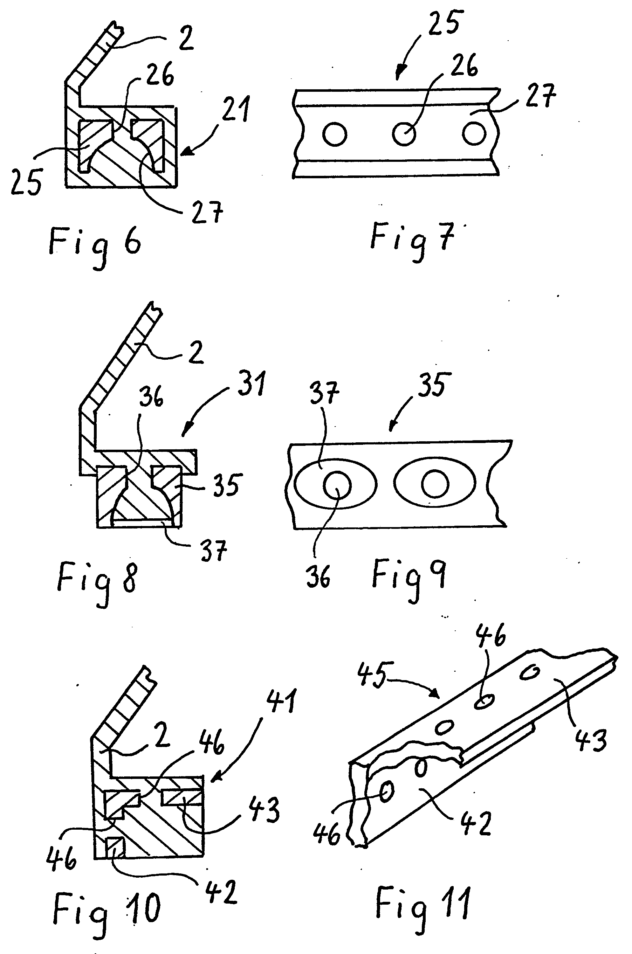

Die Fig. 6 und 7 zeigen eine vereinfachte Ausführungsform. Laschen 2 und Sohlenteil 21 stimmen in ihrer Außenform mit der der Ausführungsform der Fig. 1 bis 5b überein. Das Metallteil 25 weist dieselbe untere Rinne 27 auf, wie die zuvor beschriebene Ausführungsform. Auch Durchbrechungen 26 sind in derselben Weise vorgesehen. Es fehlen aber die quer zur Längsrichtung des Metallteiless vorgesehenen Rillen 8, 9 und 11 der Ausführungsform der Fig. 1 bis 5b.

Das Metallteil 25 ist bei dieser Ausführungsform vollständig mit Kunststoff umgossen, also auch an beiden Seitenflächen und an der Unterseite. Diese Ausführungsform ist konstruktiv einfacher und reicht für die Zwecke der Erfindung aus.

Insbesondere kann auch hier kaltverformt werden. Es ist lediglich dafür Sorge zu tragen, daß die Kunststoffbedeckung des Metallteiles 25 derart dünn ist, wie Fig. 6 zeigt, daß bei großflächigem Werkzeugangriff durch den elastischen Kunststoff hindurch ausreichend hohe Biegekräfte zur Kaltverformung des Metallteiles 25 aufgebracht werden können.

Als Vorteil dieser Konstruktion ergibt sich ein allseitiger Einschluß des Metallteiles in Kunststoff, wodurch Korrosion des Metallteiles verhindert wird und die Verletzungsgefahr für das Pferd verringert wird. Es entfallen auch nach außen offene Spalte zwischen Kunststoff und Metall, in die Erde mit Keilwirkung eingedrückt werden kann.

Bei der Ausführungsform der Fig. 6 und 7 kann auf vollständigen Verguß des Metallteiles verzichtet werden. Dann würde, wie dies Fig. 8 zeigt, das Metallteil nur auf der Oberseite von Kunststoff bedeckt sein, wobei der Kunststoff durch die Durchbrechungen 26 bis in die Rinne 27 greift. In dieser wäre der Kunststoff zwischen den Durchbrechungen durchverbunden, um so einen festen Umgriff im das Metallteil zu erreichen. Bei ausreichender Festigkeit des Kunststoffes ergäbe sich so eine völlig ausreichende Verbindung zwischen Kunststoff und Metall. Das Pferd würde in diesem Falle auf einem Sohlenteil laufen, das weitgehend wie ein übliches Eisen auf dem Boden angreift.

Anhand der Fig. 8 und 9 soll jedoch eine weitere Ausführungsform erläutert werden, bei der der Sohlenteil 31 etwa wie soeben beschrieben ausgebildet ist. Das Metallteil 35, das in Fig. 9 von unten dargestellt ist, weist jedoch keine durchgehende Rinne 27 auf, wie bei der Ausführungsform der Fig. 6 bis 7, sondern nur voneinander getrennte muldenförmige Einsenkungen 37, in die, wie Fig. 8 zeigt, von oben durch Durchbrechungen 36 der Kunststoff eingreift, um einen sicheren formschlüssigen Halt zu erzielen. Wichtig dabei ist, daß sich unterhalb der Durchbrechungen 36 der Kunststoff in den Einsenkungen 37 pilzförmig verbreitert, also bei Stoßbelastungen nicht durch die Durchbrechungen gezogen werden kann.

Schließlich ist in den Fig. 10 und 11 eine weitere Ausführungsform dargestellt, bei der wiederum die Außenform des Sohlenteiles 41 der der zuvor beschriebenen Ausführungsformen entspricht. Das Metallteil 45 ist in diesem Fall als Winkelprofil ausgebildet mit einem in der Nähe der Außenseite des Sohlenteiles 41 lotrecht verlaufenden Schenkel 42 und einem in der Nähe der Oberseite des Sohlenteiles 41 verlaufenden waagerechten Schenkel 43. In beiden Schenkeln sind Durchbrechungen 46 vorgesehen.

Das Metallteil 45 im Kunststoffmaterial des Sohlenteiles 41 eingegossen, wie dies Fig. 10 im Schnitt zeigt. Dabei werden die Durchbrechungen 46 in beiden Schenkeln des Metallteiles von Kunststoff durchflossen und sichern die gewünschte zuverlässige Verbindung von Kunststoff und Metall. Der untere Rand des lotrechten Schenkels 42 liegt in der Lauffläche frei, kann dort auf Wunsch aber auch mit Kunststoff in relativ dünner Schicht bedeckt sein. Die zu den Seiten des Sohlenteiles 41 hin liegenden Flächenbereiche des Metallteiles 45 sind nur in geringer Kunststoffschichtstärke bedeckt, so daß hier mit Werkzeugen zur Kaltverformung angegriffen werden kann. Auch auf der Oberseite ist die Kunststoffbedeckung entsprechend dünn ausgebildet, ebenso wie auf der Unterseite, die im dargestellten Ausführungsbeispiel sogar freiliegt. Auch bei dieser Ausführungsform kann also in erfindungswesentlicher Weise durch Werkzeugangriff der komplett vorgefertigte Pferdehuf kaltverformt werden.

**Ansprüche**

1. Pferdehufschuh aus Kunststoff, mit einem unter dem Hufsohlenrand hufeisenförmig angeordneten Sohlenteil aus Kunststoff,
wobei von dem Außenrand des Sohlenteiles Wandteile aufragen, die zur Klebebefestigung auf der Hufaußenfläche vorgesehen sind
und wobei in dem Sohlenteil ein hufeisenförmiges Metallstück formschlüssig eingebettet ist, dessen Festigkeit im wesentlichen allein die Formstabilität des Sohlenteiles bestimmt,
dadurch gekennzeichnet,
daß das Metallteil (5, 25, 35, 45) kaltverformbar ausgebildet ist,
daß die Längsflächen des Metallteiles zur Ermöglichung des zur Verformung erforderlichen Werkzeugangriffes im wesentlichen freiliegen,
daß das Metallteil mehrere quer zu seiner Längsrichtung verlaufende Durchbrechungen (6, 26, 36, 46) aufweist
und daß das Metallteil wenigstens durch diese hindurch von Kunststoff wenigstens teilweise umgossen ist.

2. Pferdehufschuh nach Anspruch 1, dadurch gekennzeichent, daß die Durchbrechungen (6, 26, 36, 46) das Metallteil im wesentlichen lotrecht durchsetzen.

3. Pferdehufschuh nach einem der vorhergehenden Ansprüche, dadurch gekennzeichnet, daß der Kunststoff jeweils auf beiden Seiten der Durchbrechungen (6, 26, 46) diese verbindend angeordnet ist.

4. Pferdehufschuh nach den Ansprüchen 2 und 3, dadurch gekennzeichnet, daß die Durchbrechungen (6, 26, 46) in eine längserstreckte, nach unten offene Rinne (7, 27) des Metallteiles (5, 25, 45) münden.

5. Pferdehufschuh nach einem der vorhergehenden Ansprüche, dadurch gekennzeichnet, daß Längsflächen des Metallteiles (5, 25, 35, 45) mit einer Kunststoffschicht überzogen sind, deren geringe Dicke ausreichenden Werkzeugangriff ermöglicht.

6. Pferdehufschuh nach einem der vorhergehenden Ansprüche, dadurch gekennzeichnet, daß in Längsflächen des Metallteiles (5) quer zur Längsrichtung erstreckte Rillen (8, 9) vorgesehen sind.

Fig 1

Fig 1a

Fig 2

Fig 3

Fig 4a

Fig 4b

Fig 4c

Fig 5a

Fig 5b

Fig 6

Fig 7

Fig 8

Fig 9

Fig 10

Fig 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | WO-A-8400094 (DALLMER) <br> * Zusammenfassung; Figuren 1-5 * <br> --- | 1-3 | A01L5/00 |
| Y | GB-A-438 251 (VAN GESTEL) <br> * das ganze Dokument * <br> --- | 1-3 | |
| A | BE-A-371 463 (ETNS. CHANOUX, ALBISSON ET CIE) <br> --- | | |
| A | US-A-1 334 438 (CRUMP) <br> --- | | |
| A | DE-A-616 692 (ZIMMERMANN) <br> --- | | |
| A | GB-A-400 992 (PHILLIPS RUBBER SOLES LTD.) <br> --- | | |
| A | NL-A-33637 (IMPERATOR HESTESKO) <br> ----- | | |

**RECHERCHIERTE SACHGEBIETE (Int. Cl.4)**

A01L

Der vorliegende Recherchenbericht wurde für alle Patentansprüche erstellt

| Recherchenort | Abschlußdatum der Recherche | Prüfer |
|---|---|---|
| DEN HAAG | 27 DECEMBER 1988 | VON ARX V.U. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................
& : Mitglied der gleichen Patentfamilie, übereinstimmendes Dokument